# EUROPEAN PATENT SPECIFICATION

(11) **EP 3 276 940 B1**
(45) Date of publication and mention of the grant of the patent: **07.10.2020**
(21) Application number: 16832661.9
(22) Date of filing: 30.06.2016
(51) Int. Cl.: B06B 1/06, G03B 15/00, G03B 17/02, G03B 17/56, B06B 3/02, G02B 27/00, H04N 5/225, G03B 17/08

(54) **VIBRATING DEVICE AND CAMERA**
VIBRIERENDE VORRICHTUNG UND KAMERA
DISPOSITIF VIBRANT ET CAMÉRA

(30) Priority: 04.08.2015 JP 2015154022
(43) Date of publication of application: 31.01.2018
(73) Proprietor: Murata Manufacturing Co., Ltd., Nagaokakyo-shi, Kyoto 617-8555 (JP)
(72) Inventor: FUJIMOTO, Katsumi, Nagaokakyo-shi Kyoto 617-8555 (JP); IKEUCHI, Shinsuke, Nagaokakyo-shi Kyoto 617-8555 (JP); NISHIYAMA, Kenji, Nagaokakyo-shi Kyoto 617-8555 (JP); NOMURA, Masanobu, Nagaokakyo-shi Kyoto 617-8555 (JP)
(74) Representative: Stöckeler, Ferdinand
(86) International application number: PCT/JP2016/069399
(87) International publication number: WO 2017/022382

(56) References cited:
- JP-A- H07 151 946
- JP-A- 2012 070 412
- JP-A- 2013 080 177
- JP-B2- 2 879 155
- JP-U- H0 532 191
- US-A1- 2012 243 093
- US-A1- 2014 033 454
- US-A1- 2014 185 140

## Description

### Technical Field

The present invention relates to a vibration device for use in a camera body including a lens, and to a camera.

### Background Art

An on-vehicle camera and a camera installed outdoors are exposed to rain. For this reason, a cover made of glass or a transparent plastic material is provided on a front side of a lens. However, if water drops adhere to the cover, the view of the camera becomes unclear. Moreover, images sometimes cannot be taken accurately.

JP 2012 138768 A described below discloses a dome-shaped cover for use in such an application. A cylindrical part is connected to the dome-shaped cover, and a piezoelectric ceramic vibrator is mounted in the cylindrical part. By vibrating the piezoelectric ceramic vibrator, the cylindrical part and the dome-shaped cover are vibrated. Water drops adhering to a surface of the dome-shaped cover are thereby removed.

On the other hand, JP 2007 82062 A described below discloses a structure in which an ultrasonic transducer, an adhesive layer, and an external lens are arranged on a front side of a camera body. The external lens is vibrated by driving the ultrasonic transducer. Water drops are thereby removed.

US 2014/033454 A1 discloses a lens cleaning device including a piezoelectric member operably coupled to a power source. An inner edge or an outer edge of a resilient member is operably coupled to a first side of the piezoelectric member and a lens is operably coupled to the other of the inner edge in the outer edge of the resilient member.

US 2014/185140 A1 teaches a vibration apparatus including a plate-shaped dust prevention member, a vibration application member and an electrode. The vibration application member includes a flexible thin plate-shaped piezoelectric member and the electrode is formed of a conductive thin plate or film, disposed to part or entire holding the piezoelectric member.

JP 2012 070412 A discloses driving a piezoelectric element with a frequency at which the surface of a glass plate resonates, wherein it is preferred to support the glass plate at a node position where the amplitude is zero.

### Summary of Invention

### Technical Problem

To remove water drops in JP 2012 138768 A and JP 2007 82062 A, it is necessary to greatly vibrate the dome-shaped cover and the external lens. That is, it is necessary to generate a great vibration in the piezoelectric ceramic vibrator and the ultrasonic transducer in the structures of JP 2012 138768 A and JP 2007 82062 A. For this reason, a great stress is applied to the piezoelectric ceramic vibrator and the ultrasonic transducer. Hence, cracks may occur in the piezoelectric ceramic vibrator and the ultrasonic transducer with use and may cause functional failure. In addition, it is required to remove not only the water drops but also, for example, a solution other than water, such as ethanol, a water solution in which, for example, salt or an antifreezing agent (calcium chloride) is dissolved, droplets, such as muddy water, containing impurities that are not dissolved in water, or a colloidal solution such as coffee.

An object of the present invention is to provide a vibration device in which, for example, water drops adhering to a cover and a lens can be advantageously removed without imposing any heavy load on a piezoelectric vibrator, and a camera including the vibration device.

### Solution to Problem

The invention provides a vibration device according to claim 1 or 2.

According to a wide aspect of the present invention, there is provided a vibration device used in a camera body having a lens, and including a cylindrical vibrating body part having a cylindrical member and a piezoelectric vibrator fixed to the cylindrical member, a cylindrical mode converting connected part connected to one end of the cylindrical vibrating body part, and a light transmitting body part bonded to a side of the mode converting connected part opposite from a side to which the cylindrical vibrating body part is connected, and disposed on a front side of the lens. The mode converting connected part has a thin portion having a wall thickness smaller than a wall thickness of the cylindrical vibrating body part. A flange portion extending outward is provided in an end portion of the vibrating body part on a side of the mode converting connected part. A node of a vibration of the vibrating body part exists in the flange portion, and the flange portion is fixed to a case member.

According to another wide aspect of the present invention, there is provided a vibration device used in a camera body having a lens, and including a cylindrical vibrating body part having a cylindrical member and a piezoelectric vibrator fixed to the cylindrical member, and a cylindrical mode converting connected part connected to one end of the cylindrical vibrating body part and bonded to the lens of the camera on a side opposite from a side connected to the one end of the cylindrical vibrating body part. The mode converting connected part has a thin portion having a wall thickness smaller than a wall thickness of the cylindrical vibrating body part. A flange portion extending outward is provided in an end portion of the vibrating body part on a side of the mode converting connected part. A node of a vibration of the vibrating body part exists in the flange portion, and wherein the flange portion is fixed to a case member.

According to a specific aspect of the vibration device of the present invention, the mode converting connected part converts a vibration mode of the cylindrical vibrating body part into a vibration mode of the light transmitting body part and increases vibration.

According to a specific aspect of the vibration device of the present invention, a volume of the mode converting connected part is smaller than a volume of the cylindrical vibrating body part. In this case, vibration of the cylindrical vibrating body part can be further increased in the mode converting connected part.

According to another specific aspect of the vibration device of the present invention, the piezoelectric vibrator is cylindrical.

According to a further specific aspect of the vibration device of the present invention, a resonant frequency of the vibration mode in the light transmitting body part is substantially equal to a resonant frequency of a vibration mode of a longitudinal effect or a transverse effect in the cylindrical vibrating body part. In this case, conversion of the vibration mode and increase of the vibration can be achieved more effectively.

According to a further specific aspect of the vibration device of the present invention, a resonant frequency of the vibration mode in the lens is substantially equal to a resonant frequency of a vibration mode of a longitudinal effect or a transverse effect in the cylindrical vibrating body part.

In the vibration device according to the present invention, a flange portion extending outward is provided in an end portion of the cylindrical vibrating body part on a side of the mode converting connected part. A node of a vibration of the cylindrical vibrating body part exists in the flange portion. Since leakage of vibration to the outside can be suppressed in this case, the vibration can be more effectively increased in the mode converting connected part.

According to a still further specific aspect of the vibration device of the present invention, the cylindrical vibrating body part is shaped like a circular cylinder. However, in the present invention, the cylindrical vibrating body part may be shaped like a rectangular cylinder.

According to a still further specific aspect of the vibration device of the present invention, the mode converting connected part is shaped like a circular cylinder. In this case, the mode converting connected part can be advantageously connected to the dome-shaped or disc-shaped light transmitting body part.

According to a still further specific aspect of the vibration device of the present invention, the light transmitting body part is shaped like a dome having a curved light transmitting portion disposed on a front side of the lens. In this case, a portion of the camera body where the lens is provided can be easily stored in the dome shape and a wide angle view can be achieved.

According to a still further specific aspect of the vibration device of the present invention, a vibration mode in the dome-shaped light transmitting body part is a breathing vibration mode.

According to a still further specific aspect of the vibration device of the present invention, a vibration mode of the dome-shaped light transmitting body part is a bending vibration mode.

According to a still further specific aspect of the vibration device of the present invention, a vibration mode of the lens is a breathing vibration mode.

According to a still further specific aspect of the vibration device of the present invention, a vibration mode of the lens is a bending vibration mode.

According to a still further specific aspect of the vibration device of the present invention, the mode converting connected part is constituted by a cylindrical body having the same outer diameter as an outer diameter of the cylindrical vibrating body part.

According to a still further specific aspect of the vibration device of the present invention, the mode converting connected part is constituted by a cylindrical body thinner than the cylindrical vibrating body part.

According to a still further specific aspect of the vibration device of the present invention, at least one of an outer diameter and an inner diameter of the mode converting connected part continuously changes from an end portion near the cylindrical vibrating body part toward the light transmitting body part.

According to a still further specific aspect of the vibration device of the present invention, a flange portion extending toward a center portion of the cylindrical body or an outer side portion of the cylindrical body is provided in an end portion of the mode converting connected part near the light transmitting body part.

A camera according to the present invention includes the vibration device configured according to the present invention and a camera body with at least a part thereof being stored in the vibration device.

### Advantageous Effects of Invention

According to the vibration device of the present invention, the light transmitting body part and the lens can be greatly vibrated by the actions of the mode converting connected part for converting the vibration mode and increasing the vibration without imposing any heavy load on the piezoelectric vibrator. Therefore, for example, water drops adhering to the light transmitting body part and the lens can be advantageously removed.

### Brief Description of Drawings

[Fig. 1] Fig. 1 is a schematic sectional front view of a camera according to a first embodiment of the present invention.
[Fig. 2] Fig. 2 is a perspective view of a vibration device used in the first embodiment of the present invention.
[Fig. 3] Fig. 3 is a sectional front view of a piezoelectric vibrator used in the first embodiment of the present invention.
[Fig. 4] Fig. 4 shows the relationship between the resonant characteristics and the displacement amount of a vertex of a light transmitting body part in the first embodiment of the present invention.
[Fig. 5] Fig. 5 is a schematic view explaining a displacement state of the vibration device corresponding to a displacement amount shown by arrow A in Fig. 4.
[Fig. 6] Fig. 6 is a schematic view explaining a displacement state of the vibration device corresponding to a displacement amount shown by arrow B in Fig. 4.
[Fig. 7] Fig. 7 is a schematic view explaining a displacement state of the vibration device corresponding to a displacement amount shown by arrow C in Fig. 4.
[Fig. 8] Fig. 8 is a schematic view explaining a displacement state of the vibration device corresponding to a displacement amount shown by arrow D in Fig. 4.
[Fig. 9] Fig. 9 is a schematic view explaining a displacement state of the vibration device corresponding to a displacement amount shown by arrow E in Fig. 4.
[Fig. 10] Fig. 10 is a schematic view explaining a displacement state of the vibration device corresponding to a displacement amount shown by arrow F in Fig. 4.
[Fig. 11] Fig. 11 is a perspective view illustrating a modification of a cylindrical vibrating body part.
[Fig. 12] Fig. 12 is a perspective view illustrating another modification of the cylindrical vibrating body part.
[Fig. 13] Fig. 13 is a perspective view illustrating a cylindrical vibrating body part and a mode converting connected part in a vibration device according to a second embodiment of the present invention.
[Fig. 14] Figs. 14(a) and 14(b) are schematic sectional front views, respectively, illustrating first and second modifications of combination of the cylindrical vibrating body part and the mode converting connected part in the present invention.
[Fig. 15] Figs. 15(a) and 15(b) are schematic sectional front views, respectively, illustrating third and fourth modifications of combination of the cylindrical vibrating body part and the mode converting connected part in the present invention.
[Fig. 16] Figs. 16(a) and 16(b) are schematic sectional front views, respectively, illustrating fifth and sixth modifications of combination of the cylindrical vibrating body part and the mode converting connected part in the present invention.
[Fig. 17] Figs. 17(a) and 17(b) are schematic sectional front views, respectively, illustrating seventh and eighth modifications of combination of the cylindrical vibrating body part and the mode converting connected part in the present invention.
[Fig. 18] Fig. 18 is a sectional front view of a camera according to a third embodiment.
[Fig. 19] Fig. 19 is a sectional front view of a camera according to a modification of the third embodiment.
[Fig. 20] Fig. 20 is a sectional front view of a camera according to a fourth embodiment of the present invention. Description of Embodiments

The present invention will be made clear by explaining specific embodiments of the invention with reference to the drawings.

It is noted that each of the embodiments described in this description is illustrative and that the structures shown in different embodiments can be partially replaced or combined.

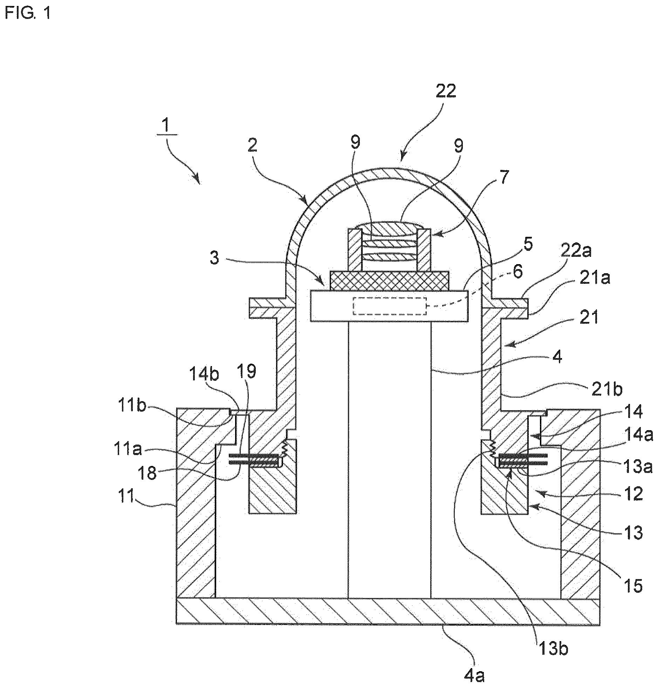

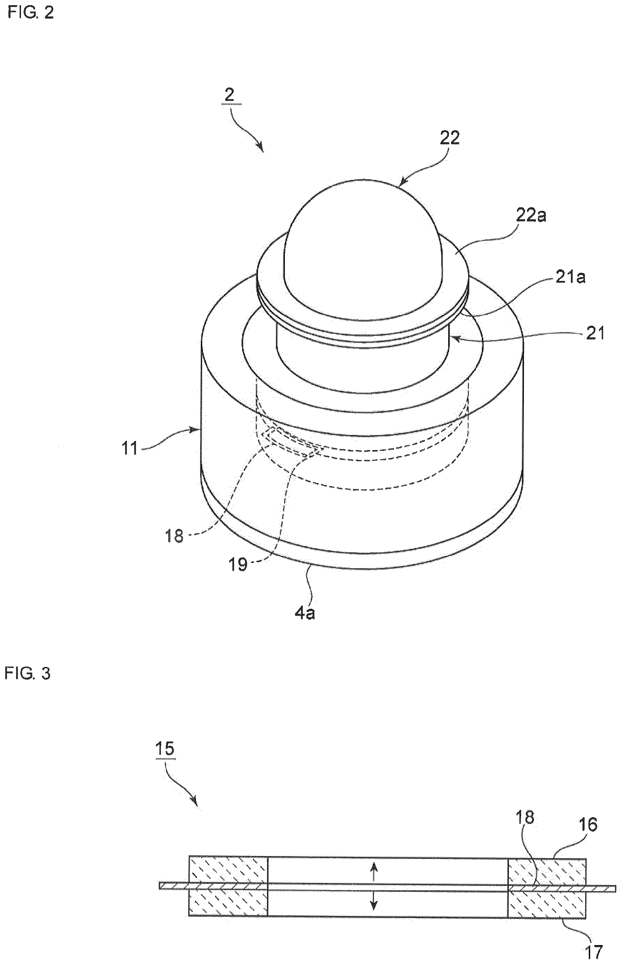

Fig. 1 is a schematic sectional front view of a camera according to a first embodiment of the present invention, and Fig. 2 is a perspective view of a vibration device used in the first embodiment.

As illustrated in Fig. 1, a camera 1 includes a vibration device 2 also functioning as a camera cover, and a camera body 3 stored inside the vibration device 2.

The camera body 3 includes a cylindrical body member 4. A lower end of the body member 4 is fixed to a base plate 4a. An imaging part 5 is fixed to an upper end of the body member 4. A circuit 6 including an image pickup element is provided inside the imaging part 5. A lens module 7 is fixed to be opposed to the imaging part 5. The lens module 7 is formed by a cylindrical body, and contains a plurality of lenses 9 therein.

The structure of the camera body 3 is not particularly limited as long as the camera body 3 can image a subject located on a front side of the lenses 9.

The vibration device 2 includes a cylindrical case member 11. In this embodiment, the cylindrical case member 11 is shaped like a circular cylinder. However, the case member 11 may have other shapes, for example, a rectangular cylindrical shape. For example, the case member 11 is made of metal or synthetic resin.

A lower end of the case member 11 is fixed to the base plate 4a. On an upper end side of the case member 11, a cylindrical projecting portion 11a projects inward in the radial direction. In an upper surface of the projecting portion 11a, a recess 11b shaped like a circular cylinder is provided.

A cylindrical vibrating body part 12 is fixed to the case member 11. In this embodiment, the cylindrical vibrating body part 12 is shaped like a circular cylinder. The cylindrical vibrating body part 12 includes a piezoelectric vibrator 15 shaped like a circular cylinder, a first cylindrical member 13 shaped like a circular cylinder, and a second cylindrical member 14 shaped like circular cylinder. As illustrated in Fig. 3, the circular cylindrical piezoelectric vibrator 15 includes piezoelectric plates 16 and 17 each shaped like a circular cylinder. Directions shown by arrows in the figure represent polarization directions of the piezoelectric plates 16 and 17. That is, in the thickness direction, the polarization direction of the piezoelectric plate 16 and the polarization direction of the piezoelectric plate 17 are opposite from each other. A cylindrical terminal 18 is held between the piezoelectric plates 16 and 17. Also, a cylindrical terminal 19 is held between the piezoelectric plate 16 and the second cylindrical member 14.

In the present invention, the cylindrical vibrating body part and the cylindrical piezoelectric vibrator may be shaped like a rectangular cylinder instead of being shaped like a circular cylinder. Preferably, a circular cylindrical shape, that is, a ring shape is used.

The piezoelectric plates 16 and 17 are made of a PZT piezoelectric ceramic material. However, other piezoelectric ceramic materials, such as (K,Na)NbO₃, may be used. Alternatively, piezoelectric single crystal, such as LiTaO₃, may be used.

Unillustrated electrodes are provided on both surfaces of each of the piezoelectric plates 16 and 17. These electrodes have, for example, a laminate structure of Ag/NiCu/NiCr. The terminal 18 is disposed in contact with the inner electrodes of the piezoelectric plates 16 and 17 in the laminate direction. This terminal 18 is made of an appropriate conductive material. As such a conductive material, Cu, Ag, Al, or an alloy mainly composed of these materials can be suitably used.

Returning to Fig. 1, the first cylindrical member 13 shaped like a circular cylinder is fixed to a lower surface of the piezoelectric vibrator 15. The first cylindrical member 13 has a mount portion 13a shaped like a circular cylinder and opening outward in the radial direction. The piezoelectric vibrator 15 is disposed on the mount portion 13a. An external thread portion 13b is provided on an upper outer peripheral surface of an inner end portion of the mount portion 13a in the radial direction.

The first cylindrical member 13 is made of metal. As the metal, for example, duralumin, stainless steel, or kovar can be used. However, the first cylindrical member 13 may be made of a semiconductor having conductivity, for example, Si.

On the other hand, the second cylindrical member 14 is disposed on the first cylindrical member 13. The second cylindrical member 14 has a lower end surface 14a. The lower end surface 14a shaped like a circular cylinder is in contact with an upper surface of the piezoelectric vibrator 15. That is, the piezoelectric vibrator 15 is held between the lower end surface 14a and the above-described mount portion 13a. Both the first cylindrical member 13 and the second cylindrical member 14 are made of metal and have conductivity. By applying an alternating-current electric field between the terminal 18 and the terminal 19, the piezoelectric vibrator 15 can be vibrated longitudinally or transversely. An internal thread portion is provided on an inner peripheral surface of the second cylindrical member 14 near the lower end surface 14a. Thus, the first cylindrical member 13 is screwed in the second cylindrical member 14, and the first cylindrical member 13 is fixed to the second cylindrical member 14. By this screwing, the lower end surface 14a and the mount portion 13a described above are in pressure contact with the upper surface and the lower surface of the piezoelectric vibrator 15, respectively.

Therefore, the entire cylindrical vibrating body part 12 is efficiently vibrated by vibration generated in the piezoelectric vibrator 15. In this embodiment, the cylindrical vibrating body part 12 is efficiently oscillated by a longitudinal effect or a transverse effect.

On the other hand, a mode converting connected part 21 is provided integrally with the second cylindrical member 14. In this embodiment, the second cylindrical member 14 and the mode converting connected part 21 are made of metal and are integrally connected. However, the second cylindrical member 14 and the mode converting connected part 21 may be formed by separate members. The connection structure of the mode converting connected part 21 and the cylindrical vibrating body part 12 is not particularly limited as long as the mode converting connected part 21 can convert and increase the mode of vibration of the cylindrical vibrating body part 12 when the vibration is transmitted, as will be described later.

In all embodiments of the present invention, a flange portion 14b projects outward on the upper surface of the second cylindrical member 14. The flange portion 14b is placed on and fixed to the recess 11b of the above-described case member 11.

The above-described cylindrical vibrating body part 12 has such a structure that the portion where the flange portion 14b is provided serves as a vibration node. Therefore, even when the cylindrical vibrating body part 12 is fixed at the flange portion 14b to the case member 11, vibration of the cylindrical vibrating body part 12 is rarely lost.

In this embodiment, the mode converting connected part 21 is shaped like a circular cylinder. The mode converting connected part 21 may have other shapes such as a rectangular cylindrical shape. As in various modifications to be described later, the shape of the mode converting connected part 21 can be changed appropriately.

The mode converting connected part 21 is made of metal. The metal is not particularly limited, and an appropriate metal, such as stainless steel, duralumin, or kovar, can be used. Alternatively, a semiconductor material having conductivity, such as Si, may be used instead of the metal. To improve the actions of the mode converting connected part for converting the vibration mode and increasing the amplitude, the mode converting connected part 21 is preferably made of a material with little vibration loss.

As will be described later, the mode converting connected part 21 serves to convert the vibration mode and to increase vibration generated in the cylindrical vibrating body part 12 when the vibration is transmitted to a light transmitting body part to be described next.

A flange portion 21a projects outward from both ends of the mode converting connected part 21. A lower portion connected to the flange portion 21a serves as a thin portion 21b. The thickness of the thin portion 21b is smaller than the thickness of the cylindrical vibrating body part 12. For this reason, the cylindrical thin portion 21b is greatly displaced by vibration transmitted from the cylindrical vibrating body part 12. The existence of the thin portion 21b can increase the vibration, especially, amplitude. The thin portion 21b may be provided in at least a part of the portion lower than the flange portion 21a. When the flange portion 21a is not provided, the thin portion 21b may be formed in at least a part of the cylindrical mode converting connected part 21. The thin portion 21b preferably has a cylindrical shape in the cylindrical mode converting connected part 21.

A light transmitting body part 22 is fixed on the flange portion 21a. The light transmitting body part 22 has a cavity opening downward. A flange portion 22a projects outward from the cavity opening downward. The flange portion 22a is bonded to the flange portion 21a. This bonding is made with, for example, an adhesive or a brazing material. Alternatively, thermocompression bonding or anode bonding may be used.

The light transmitting body part 22 is shaped like a dome extending upward from an inner end of the flange portion 22a. In this embodiment, this dome is hemispherical. For example, the camera body 3 has a viewing angle of 170°. However, the dome shape is not limited to the hemispherical shape. The dome shape may be a combination of a hemisphere and a cylinder or a curved shape smaller than the hemisphere. The entire light transmitting body part 22 has a light transmitting property. In this embodiment, the light transmitting body part 22 is made of glass. However, the material of the light transmitting body part 22 is not limited to glass, but may be, for example, a transparent plastic material. Alternatively, the light transmitting body part 22 may be made of a light-transmitting ceramic material. However, toughened glass is preferably used depending on the purpose. This can increase the strength. Further, when glass is used, a coating layer made of, for example, DLC may be provided on a surface of the glass to increase the strength.

Inside the light transmitting body part 22, the above-described lens module 7 is disposed. An image of an external subject to be imaged is taken through the light transmitting body part 22.

The entire light transmitting body part 22 has a light transmitting property. However, a light transmitting portion may be disposed only in a front part of the light transmitting body part 22 where the lenses 9 of the lens module 7 are arranged. Preferably, the entire light transmitting body part 22 forms a light transmitting portion as in this embodiment.

To more advantageously prevent adhesion of water drops, a hydrophobic film is preferably provided on an outer surface of the light transmitting body part 22. Alternatively, a hydrophilic film may be provided so that water moves to a portion where the hydrophilic film is provided. That is, for example, a hydrophilic portion may be provided in a region other than a region where an image is taken by the lenses 9 so that water drops move toward the hydrophilic portion.

Next, a description will be given of the operation of the vibration device 2 for removing water drops.

For example, when the camera 1 is installed outdoors, water drops of rain sometimes adhere to the surface of the light transmitting body part 22. To remove the water drops, the piezoelectric vibrator 15 is driven. That is, an alternating-current electric field is applied to the piezoelectric vibrator 15. While the alternating-current electric field is not particularly limited, a sufficient current, such as a sinusoidal wave, to remove water drops is applied. As a result, the piezoelectric vibrator 15 vibrates in a longitudinal vibration mode or a transverse vibration mode. Along therewith, the cylindrical vibrating body part 12 including the first cylindrical member 13 and the second cylindrical member 14 provided integrally with the piezoelectric vibrator 15 vibrates by a longitudinal effect or a transverse effect. In the transverse effect, the cylindrical vibrating body part 12 vibrates in a breathing vibration mode. On the other hand, in the longitudinal effect, the cylindrical vibrating body part 12 vibrates in a longitudinal vibration mode.

In this embodiment, the resonant frequency of the vibration mode of the longitudinal effect and the transverse effect in the cylindrical vibrating body part 12 and the resonant frequency of the vibration mode in the light transmitting body part 22 are preferably substantially equal to each other, and more preferably, are equal to each other.

Vibration of the cylindrical vibrating body part 12 is transmitted to the mode converting connected part 21. The vibration mode is converted and the amplitude is increased by the mode converting connected part 21. As a result, the light transmitting body part 22 greatly vibrates, water drops are atomized, and the water drops adhering to the outer surface of the light transmitting body part 22 can vanish. Alternatively, the adhering water drops can be directly scattered from the outer surface of the light transmitting body part 22 or can be caused to flow downward. This allows the water drops to be advantageously removed.

The vibration device 2 is characterized in that vibration greater than vibration of the cylindrical vibrating body part 12 is generated in the light transmitting body part 22 because the mode converting connected part 21 is provided. This can reduce the load on the piezoelectric vibrator 15. That is, the water drops can be advantageously removed without greatly deforming the piezoelectric vibrator 15.

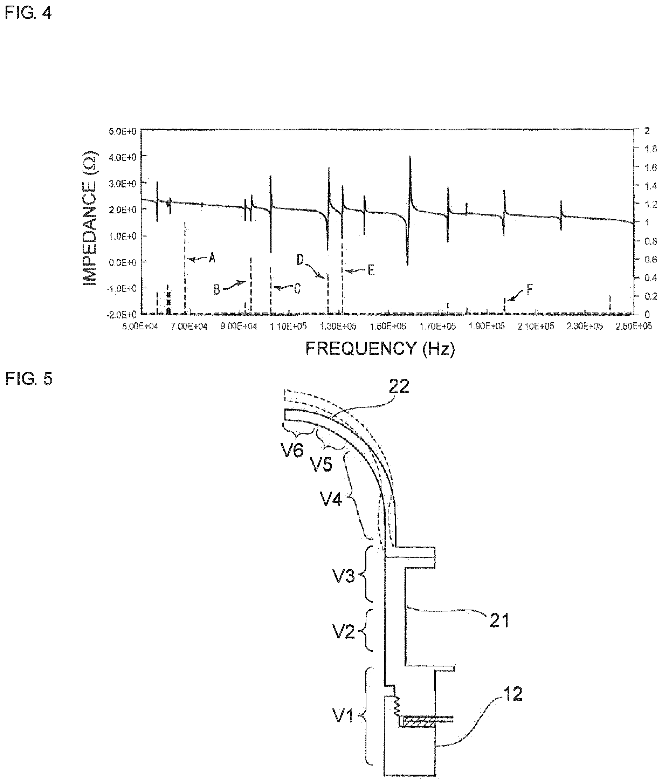

When the piezoelectric vibrator 15 is driven, as described above, the vibration mode is converted by the mode converting connected part 21, and the vibration is transmitted to the light transmitting body part 22. Fig. 4 shows the relationship between the resonance characteristics and the displacement amount of the vertex of the light transmitting body part when the frequency for driving the piezoelectric vibrator 15 is variously changed. In Fig. 4, a solid line shows the resonance characteristics, and a broken line shows the displacement amount of the vertex.

Fig. 4 reveals that various responses of resonance are appear when the driving frequency is changed. It is also known that, as shown by the broken line in Fig. 4, the displacement amount of the vertex greatly varies according to the vibration mode, separately from the magnitude of the resonance response.

It is also known that the displacement amount of the vertex is large at arrows A to F in Fig. 4. It is known that a larger displacement amount is obtained particularly at arrows A to E. The displacement states of the vibration device at arrows A to F are schematically illustrated in Figs. 5 to 10.

Figs. 5 to 10 respectively show the displacement states of the vibration device corresponding to the displacement amounts shown by arrows A to F in Fig. 4.

In Fig. 5, the cylindrical vibrating body part 12 is vibrated in a breathing vibration mode by a transverse effect, and the light transmitting body part 22 is displaced in a bending vibration mode. In this case, the mode converting connected part 21 converts the breathing vibration mode into the bending vibration mode. A large displacement amount is obtained at the vertex of the light transmitting body part 22, as shown by arrow A in Fig. 4. That is, the vibration mode is converted and the amplitude is increased by the mode converting connected part 21.

The following displacement amounts at portions V1 to V6 in Fig. 5 were found by simulation.

Portion V1: range of 0 to 2.3 µm. Portion V2: range of 0 to 2.3 µm. Portion V3: range of 0 to 4.6 µm. Portion V4: range of 4.6 to 13.8 µm. Portion V5: range of 18.4 to 20.7 µm. Portion V6: range of 20.7 to 23.0 µm.

The above displacement amounts are the results of simulation when the dimensions of the cylindrical vibrating body part 12, the mode converting connected part 21, and the light transmitting body part 22 are as follows.

Dimensions of cylindrical vibrating body part 12: inner diameter 22.0 mm, outer diameter 32.0 mm, length 11.2 mm
Dimensions of mode converting connected part 21: inner diameter 22.0 mm, outer diameter 28.0 mm, length 11.2 mm
Dimensions of light transmitting body part 22: spherical shell inner diameter 22.0 mm, thickness 1.0 mm

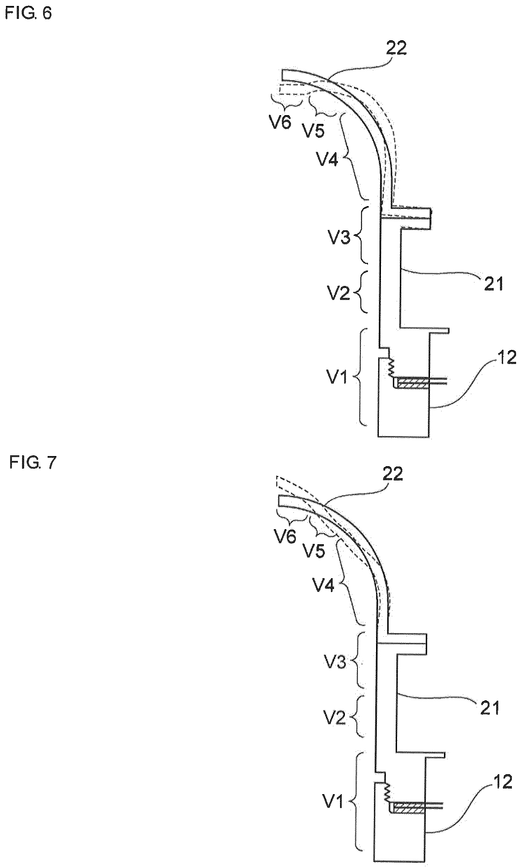

In the following Figs. 6 to 10, the displacement amounts of the portions V1 to V6 were found similarly.

In a state illustrated in Fig. 6, the cylindrical vibrating body part 12 is vibrated in a breathing vibration mode by a transverse effect. That is, the cylindrical vibrating body part 12 vibrates to become small and large in the radial direction. In this case, the light transmitting body part 22 repeats displacements shown by a solid line and a broken line. That is, the light transmitting body part 22 vibrates in a higher-order mode of a bending vibration mode. In this case, a large displacement amount is also obtained, as shown by arrow B in Fig. 4.

The displacement amounts at the portions V1 to V6 in Fig. 6 were as follows.

Portion V1: range of 0 to 1.5 µm. Portion V2: range of 0 to 1.5 µm. Portion V3: range of 0 to 1.5 µm. Portion V4: range of 3.0 to 9.0 µm. Portion V5: range of 7.5 to 12.0 µm. Portion V6: range of 12.0 to 15.0 µm.

In a displacement state illustrated in Fig. 7, the cylindrical vibrating body part 12 is vibrated in a breathing vibration mode by a transverse effect. The light transmitting body part 22 serving as the dome portion vibrates between a state shown by a solid line and a state shown by a broken line, and also vibrates in a higher-order mode of a bending vibration mode. In this case, a large displacement amount is also obtained at the vertex of the light transmitting body part 22, as shown by arrow C in Fig. 4.

The displacement amounts at the portions V1 to V6 in Fig. 7 were as follows.

Portion V1: range of 0 to 1.2 µm. Portion V2: range of 0 to 1.2 µm. Portion V3: range of 0 to 2.4 µm. Portion V4: range of 2.4 to 8.4 µm. Portion V5: range of 7.2 to 10.8 µm. Portion V6: range of 9.6 to 12.0 µm.

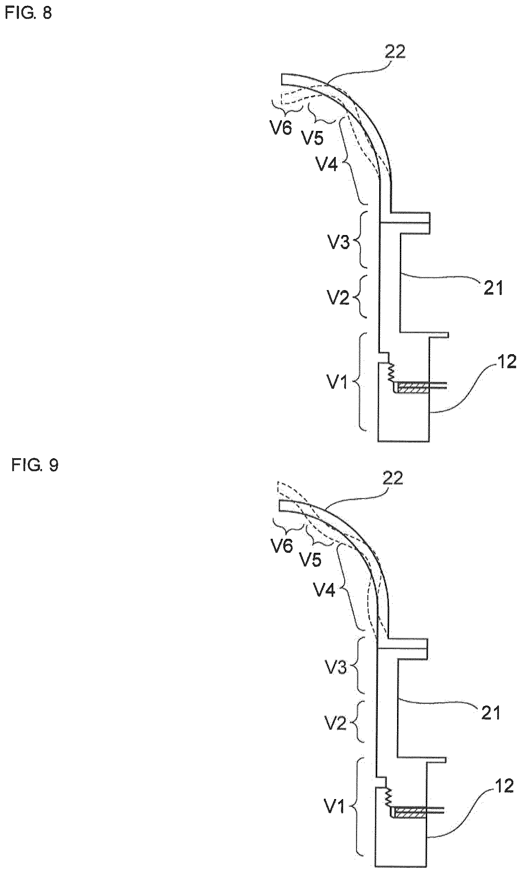

In a displacement state illustrated in Fig. 8, the cylindrical vibrating body part 12 is vibrated in a breathing vibration mode by a transverse effect. The light transmitting body part 22 vibrates between a state shown by a solid line and a state shown by a broken line, that is, vibrates in a higher-order mode of the breathing vibration mode. In this case, a large displacement amount is also obtained in the light transmitting body part 22, as shown by arrow D in Fig. 4.

The displacement amounts at the portions V1 to V6 in Fig. 8 were as follows.

Portion V1: range of 0 to 1.1 µm. Portion V2: range of 0 to 1.1 µm. Portion V3: range of 0 to 1.1 µm. Portion V4: range of 0 to 5.5 µm. Portion V5: range of 5.5 to 8.8 µm. Portion V6: range of 7.7 to 11.0 µm.

In a displacement state illustrated in Fig. 9, the cylindrical vibrating body part 12 is vibrated in a breathing vibration mode by a transverse effect. In this case, the light transmitting body part 22 repeats a state shown by a solid line and a state shown by a broken line. That is, it is known that the light transmitting body part 22 vibrates in a higher-order mode of a bending vibration mode. In this case, it is known that a large displacement amount is also obtained, as shown by arrow E.

The displacement amounts at the portions V1 to V6 in Fig. 9 were as follows.

Portion V1: range of 0 to 1.8 µm. Portion V2: range of 0 to 1.8 µm. Portion V3: range of 0 to 1.8 µm. Portion V4: range of 1.8 to 10.8 µm. Portion V5: range of 3.6 to 14.4 µm. Portion V6: range of 7.7 to 11.0 µm.

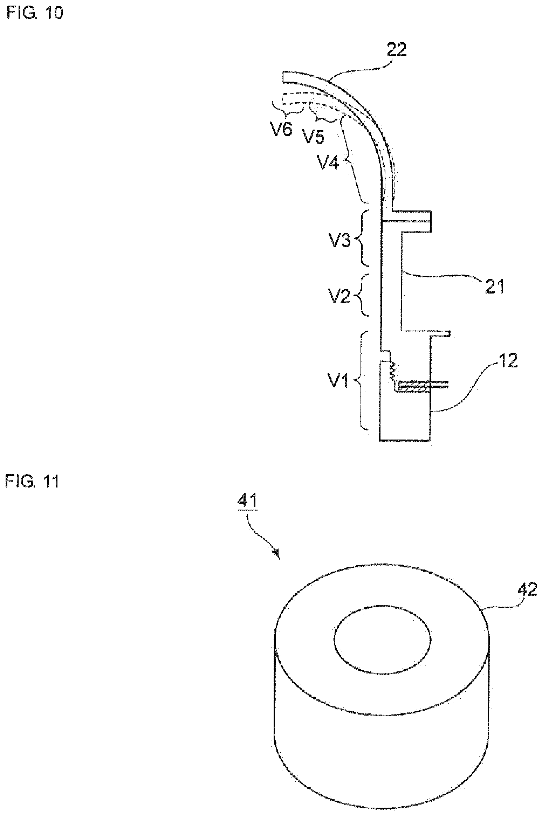

In a displacement state illustrated in Fig. 10, the cylindrical vibrating body part 12 is vibrated in a longitudinal vibration mode by a longitudinal effect. In this case, the light transmitting body part 22 vibrates in a breathing vibration mode. In this case, the displacement amount at the vertex of the light transmitting body part 22 is also sufficiently large, as shown by arrow F in Fig. 4.

The displacement amounts at the portions V1 to V6 in Fig. 10 were as follows.

Portion V1: range of 0 to 0.45 µm. Portion V2: range of 0 to 0.45 µm. Portion V3: range of 0 to 0.90 µm. Portion V4: range of 0.45 to 3.15 µm. Portion V5: range of 3.15 to 3.60 µm. Portion V6: range of 3.60 to 4.50 µm.

In this embodiment, when the maximum displacement amount of the piezoelectric vibrator 15 in the cylindrical vibrating body part 12 is taken as X₀ and the maximum displacement amount at the vertex of the light transmitting body part 22 is taken as Xₐ, Xₐ/X₀=500 or more is achieved. Therefore, the amplitude is sufficiently increased by the mode converting connected part 21. Thus, the water drops can be advantageously removed, and the load on the piezoelectric vibrator 15 can be reduced, as described above.

Even when a solution other than water, such as ethanol, a water solution in which, for example, salt or an antifreezing agent (calcium chloride) is dissolved, droplets containing impurities that are not dissolved in water, such as muddy water, or a colloidal solution such as coffee (hereinafter referred to as droplets) adheres to the camera, it can be removed similarly. Specifically, droplets are atomized with contents left dissolved by greatly vibrating the light transmitting body part 22, and this can remove the droplets adhering to the outer surface of the light transmitting body part 22. This action is different from evaporation, and can cause dissolved matter/impurities in the droplets to vanish together with the droplets without being deposited.

Below is the result of a first experiment. The dimensions of a cylindrical vibrating body part 12, a mode converting connected part 21, and a light transmitting body part 22 used in the first experiment are as follows.

Dimensions of cylindrical vibrating body part 12: inner diameter 8.0 mm, outer diameter 18.0 mm, length 16.0 mm. Dimensions of mode converting connected part 21: inner diameter 8.0 mm, outer diameter 18.0 mm, length 5.7 mm. Dimensions of light transmitting body part 22: spherical shell inner diameter 8.0 mm, thickness 1.0 mm.

For example, a salt water of about 0.4% (a water solution obtained by dissolving 14 g of NaCl in 1 liter of water) was dripped onto the light transmitting body part 22 little by little, and was continuously atomized. Specifically, 15 ml of salt water was dripped in one hour. In this case, the water solution could also be caused to vanish without deposition of NaCl contained in the salt water.

Further, as for a colloidal solution, such as coffee, and a solution other than water such as ethanol, the solution adhering to the outer surface of the light transmitting body part 22 could be similarly caused to vanish without deposition of the contents on the light transmitting body part 22.

In the case of droplets containing impurities that are not dissolved in water, for example, mud, when the vibration device is set in a proper direction (downward direction), the water drops can be atomized together with the impurities that are not dissolved in water and the water drops adhering to the outer surface of the light transmitting body part 22 can be caused to vanish. Although the impurities sometimes remain on the light transmitting body part 22 when the amount or size of the impurities is large, such residues fall by its own weight and vibration occurring in the light transmitting body part 22. Hence, the view of the light transmitting body part 22 will not become unclear.

Below is a result of a second experiment. Dimensions of a cylindrical vibrating body part 12, a mode converting connected part 21, and a light transmitting body part 22 used in the second experiment are the same as those used in the first experiment.

For example, when the vibration device was disposed in a direction inclined downward at an angle of 45° to the horizontal direction and droplets obtained by dispersing 10 g of general soil in 90 ml of water were dripped on the light transmitting body part 22 little by little and were continuously atomized (in this case, 15 ml was dripped per hour), impurities having a small particle diameter were atomized together with the water and vanished from the outer surface of the light transmitting body part 22. Although impurities having a large particle diameter remained on the light transmitting body part 22, they fell a certain time after and were removed from the outer surface of the light transmitting body part 22.

In the above embodiment, the thickness of the first cylindrical member 13 and the thickness of the second cylindrical member 14 are equal to each other, and the piezoelectric vibrator 15 is provided in the center of the cylindrical vibrating body part 12 in the thickness direction. However, in the present invention, the structure of the cylindrical vibrating body part is not limited thereto.

Fig. 11 is a perspective view illustrating a modification of the cylindrical vibrating body part. A cylindrical vibrating body part 41 illustrated in Fig. 11 is constituted only by a cylindrical piezoelectric body 42. That is, the thickness of the piezoelectric vibrator 15 in the first embodiment is sufficiently increased, and the first cylindrical member 13 and the second cylindrical member 14 are omitted. In this way, the cylindrical vibrating body part 41 may be constituted only by the piezoelectric vibrator.

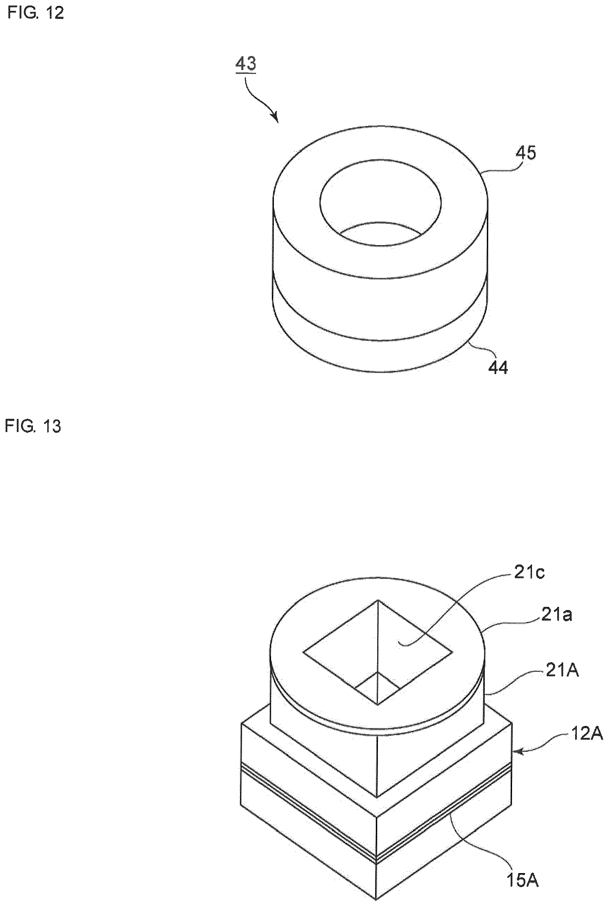

Fig. 12 is a perspective view illustrating another modification of the cylindrical vibrating body part. In a cylindrical vibrating body part 43, a cylindrical member 45 made of, for example, metal is stuck on one surface of a cylindrical piezoelectric vibrator 44. In this way, a unimorph cylindrical vibrating body part in which a metal plate is stuck on one surface of the cylindrical piezoelectric vibrator 44 may be used.

Fig. 13 is a perspective view illustrating a cylindrical vibrating body part and a mode converting connected part in a vibration device according to a second embodiment of the present invention. As illustrated in Fig. 13, a cylindrical vibrating body part 12A shaped like a rectangular cylinder is provided in the second embodiment. The cylindrical vibrating body part 12A shaped like a rectangular cylinder is square in plan view, and has a square cavity. A piezoelectric vibrator 15A is also shaped like a rectangular frame. Such a cylindrical vibrating body part 12A shaped like a rectangular cylinder may be used. In this case, a mode converting connected part 21A is also shaped like a rectangular cylinder, and has a rectangular cavity 21c. In Fig. 13, a flange portion 21a projects outward at an upper end of the mode converting connected part 21A. A portion other than the flange portion 21a forms a thin portion. Therefore, the thickness of the mode converting connected part 21A is smaller than the thickness of the cylindrical vibrating body part 12A. That is, the entire mode converting connected part 21A constitutes the thin portion. The light transmitting body part 22 illustrated in Fig. 1 is fixed on the flange portion 21a. In this way, in the present invention, the cylindrical vibrating body part and the mode converting connected part may be shaped like a rectangular cylinder, but a circular cylinder, as in the cylindrical vibrating body part 12A and the mode converting connected part 21A.

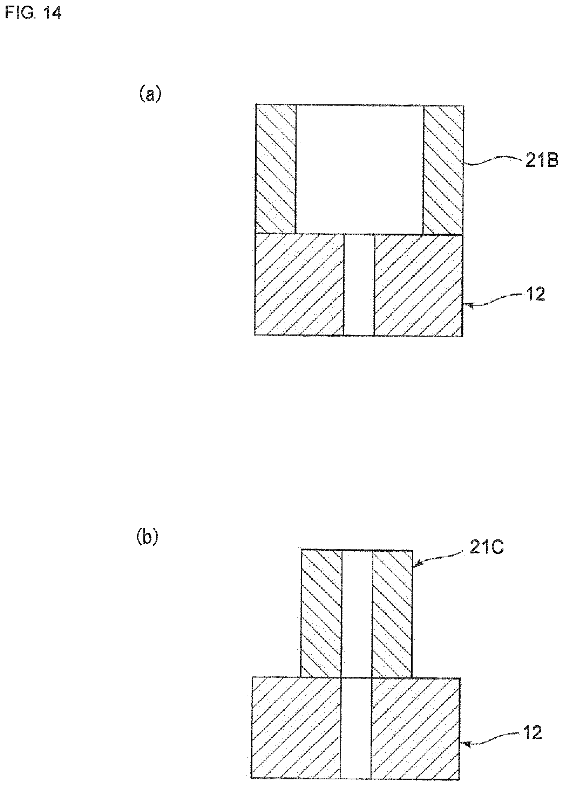

Figs. 14(a) and 4(b) to Figs. 17(a) and 17(b) are schematic sectional front views of first to eighth modifications of combination of a cylindrical vibrating body part and a mode converting connected part in the present invention.

In a first modification illustrated in Fig. 14(a), a mode converting connected part 21B shaped like a circular cylinder is connected onto a cylindrical vibrating body part 12 shaped like a circular cylinder. Herein, the outer diameter of the mode converting connected part 21B is equal to the outer diameter of the cylindrical vibrating body part 12. The inner diameter of the mode converting connected part 21B is larger than the inner diameter of the cylindrical vibrating body part 12.

In a second modification illustrated in Fig. 14(b), a cylindrical vibrating body part 12 and a mode converting connected part 21C are shaped like a circular cylinder. Herein, the outer diameter of the mode converting connected part 21C is smaller than the outer diameter of the cylindrical vibrating body part 12. The inner diameter of the cylindrical vibrating body part 12 and the inner diameter of the mode converting connected part 21C are equal to each other. In this modification, the entire mode converting connected part 21C also constitutes a thin portion.

In the first and second modifications, the cylindrical vibrating body part 12 may also be shaped like a rectangular cylinder, but a circular cylinder. The mode converting connected parts 21B and 21C may also be shaped like a rectangular cylinder.

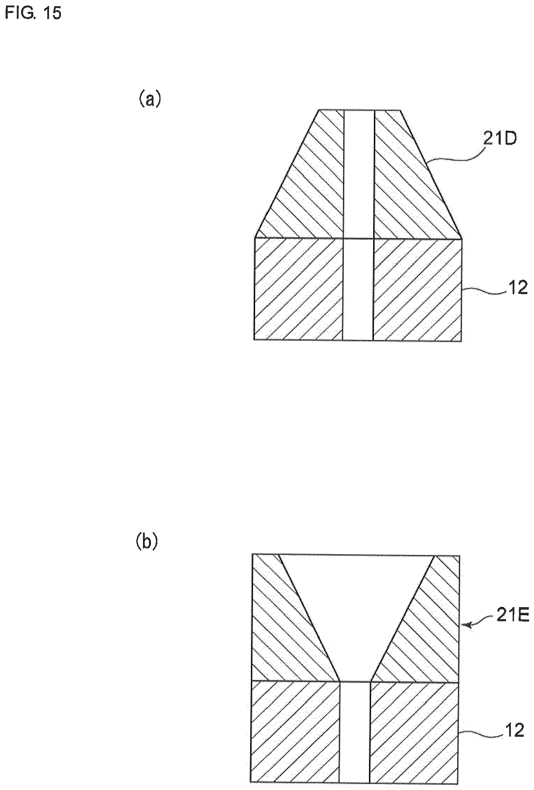

In a third modification illustrated in Fig. 15(a), a mode converting connected part 21D is tapered so that the outer diameter thereof decreases with an increasing distance from a cylindrical vibrating body part 12. In this way, the mode converting connected part may be tapered like the mode converting connected part 21D. Herein, a portion of the mode converting connected part 21D whose thickness is smaller than the thickness of the cylindrical vibrating body part 12 corresponds to a thin portion. In Fig. 15(b), a portion of a mode converting connected part 21E whose thickness is smaller than the thickness of a cylindrical vibrating body part 12 also constitutes a thin portion.

In a fourth modification illustrated in Fig. 15(b), the cross-sectional area of a hollow portion of the mode converting connected part 21E increases with an increasing distance from the cylindrical vibrating body part 12. In this way, in the mode converting connected part 21E, the thickness may be changed to decrease with an increasing distance from the cylindrical vibrating body part 12.

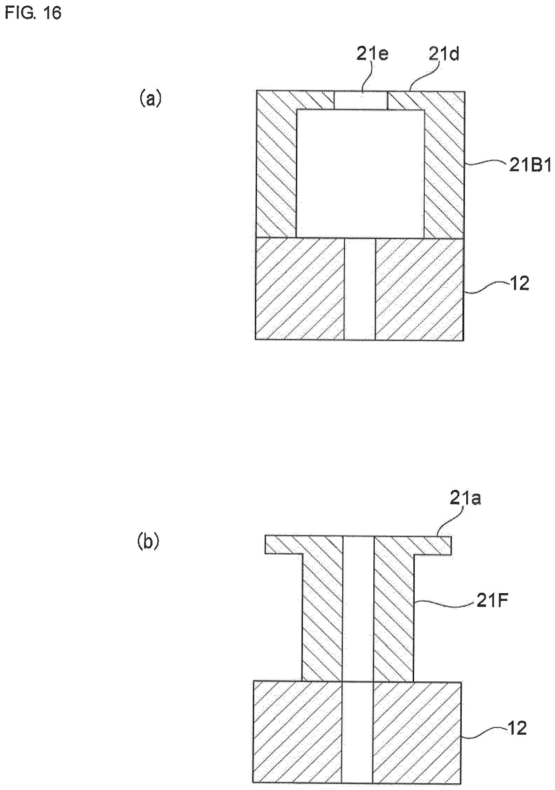

In a fifth modification illustrated in Fig. 16(a), an inward flange portion 21d projects inward at an upper end of a mode converting connected part 21B1. This makes the opening area of an opening 21e smaller than that of a hollow space in the mode converting connected part 21B1.

In Fig. 16(a), a portion of the mode converting connected part 21B1 lower than the inward flange portion 21d constitutes a thin portion.

Conversely, as in a sixth modification illustrated in Fig. 16(b), a flange portion 21a projecting outward may be provided at an upper end of a mode converting connected part 21F, similarly to the first embodiment.

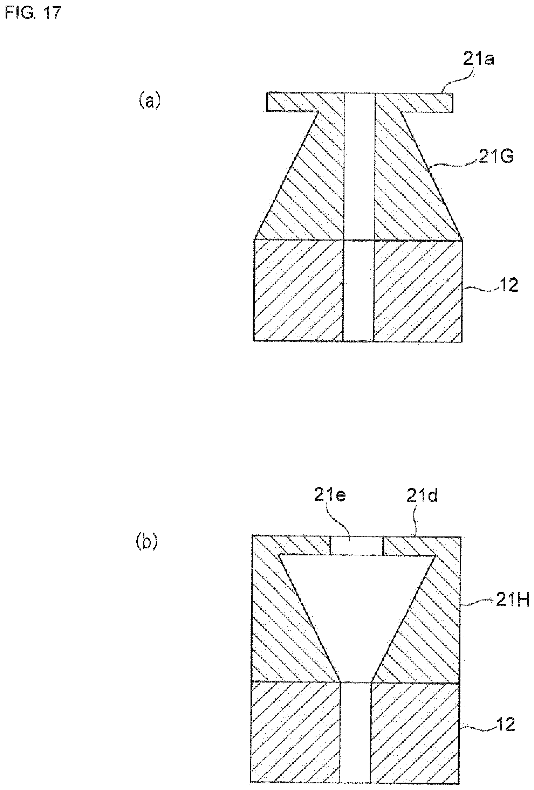

In a seventh modification illustrated in Fig. 17(a), a mode converting connected part 21G has a structure similar to that of the mode converting connected part 21D illustrated in Fig. 15(a). However, a flange portion 21a projecting outward is provided at an upper end of the mode converting connected part 21G. In this way, the flange portion 21a may be provided at the upper end of the tapered portion.

In a mode converting connected part 21H according to an eighth modification illustrated in Fig. 17(b), an inward flange portion 21d projecting inward is provided at an upper end of the same structure as that of the mode converting connected part 21E illustrated in Fig. 15(b). This makes the area of an opening 21e small.

In Figs. 17(a) and 17(b), portions of the mode converting connected parts 21G and 21H whose thicknesses are smaller than the thickness of the cylindrical vibrating body part 12 serve as thin portions.

As is clear from the above-described first to eighth modifications, the shapes of the cylindrical vibrating body part 12 and the mode converting connected part can be variously changed.

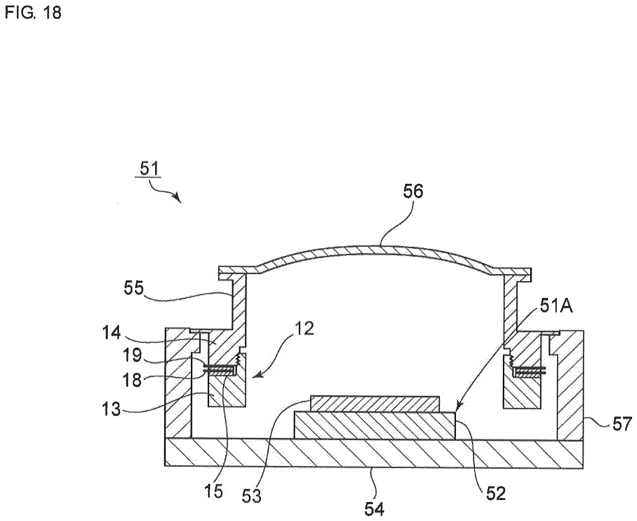

Fig. 18 is a sectional front view of a camera according to a third embodiment of the present invention. A camera 51 according to the third embodiment includes a vibration device and a camera body stored in the vibration device. The camera body includes a body member 51A. The body member 51A is fixed to a base plate 54. The camera body includes a circuit board 52 provided in the body member 51A and an image pickup element 53 provided on the circuit board 52. A lens 56 is set to be opposed to the image pickup element 53. This lens 56 has a convex outer surface and a concave inner surface. That is, the inner surface projects outward. Therefore, the outer surface of the lens 56 is curved, similarly to the light transmitting body part 22 of the first embodiment. The viewing angle of the lens 56 is, for example, 160°. One end of a mode converting connected part 55 to be described later is bonded to an outer peripheral edge of the lens 56.

The vibration device 51 includes a cylindrical case member 57. In this embodiment, the cylindrical case member 57 is shaped like a circular cylinder. However, the case member 57 may have other shapes such as a rectangular cylindrical shape. The case member is made of, for example, metal or synthetic resin.

A lower end of the case member 57 is fixed to the base plate 54. On an upper end side of the case member 57, a cylindrical projecting portion projects inward in the radial direction. A recess shaped like a circular cylinder is provided in an upper surface of the projecting portion.

A cylindrical vibrating body part 12 is fixed to the case member 57. In this embodiment, the cylindrical vibrating body part 12 is shaped like a circular cylinder. The cylindrical vibrating body part 12 includes a piezoelectric vibrator 15 shaped like a circular cylinder, a first cylindrical member 13 shaped like a circular cylinder, and a second cylindrical member 14 shaped like a circular cylinder, similarly to the first embodiment.

The first cylindrical member 13 is fixed to one principal surface of the piezoelectric vibrator 15. The second cylindrical member 14 is disposed on the other principal surface of the first cylindrical member 13. The entire cylindrical vibrating body part 12 is efficiently vibrated by vibration generated in the piezoelectric vibrator 15. In this embodiment, the cylindrical vibrating body part 12 is efficiently oscillated by a longitudinal effect or a transverse effect.

A mode converting connected part 55 similar to that of the first embodiment is provided integrally with the second cylindrical member 14. In this embodiment, the second cylindrical member 14 and the mode converting connected part 55 are made of metal and are integrally connected. An outer peripheral edge of the lens 56 is bonded to one end of the mode converting connected part 55. The cylindrical vibrating body part 12 is bonded to the other end of the mode converting connected part 55.

Although schematically illustrated in Fig. 18, the mode converting connected part 55 has a thin portion having a thickness smaller than the thickness of the cylindrical vibrating body part 12. In this embodiment, the thickness of the entire mode converting connected part 55 is smaller than that of the cylindrical vibrating body part 12, and the mode converting connected part 55 entirely serves as a thin portion. The mode converting connected part 55 has a structure similar to that of the mode converting connected part 21 in the first embodiment. That is, the mode converting connected part 55 is configured to convert the vibration mode of the cylindrical vibrating body part 12 and to increase the vibration. This gives a great vibration to the lens 56.

In this embodiment, the resonant frequency of the vibration mode in the cylindrical vibrating body part 12 is preferably substantially equal to the resonant frequency of vibration of the lens 56. This can more effectively increase the vibration.

The cylindrical vibrating body part 12 may vibrate in either a longitudinal vibration mode or a transverse vibration mode, similarly to the first embodiment. Further, the vibration mode of the lens 56 may either a bending vibration mode or a breathing vibration mode, and is not particularly limited. In the camera 51 of this embodiment, the lens 56 is greatly vibrated, and can remove water drops adhering to the outer surface of the lens 56 and cause the water drops to flow down, as described above. In this way, the vibration device may be structured to include the lens 56 itself.

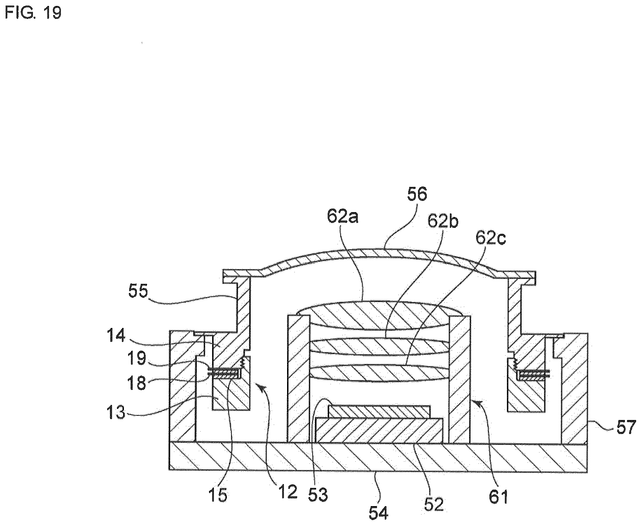

While the camera 51 according to the third embodiment of the present invention includes the single lens 56, a separate lens module 61 may be disposed between the lens 56 and the image pickup element 53 to adjust the optical path, as illustrated in Fig. 19. The lens module 61 includes a cylindrical body and a plurality of lenses 62a to 62c arranged inside the cylindrical body. The lens module 61 is provided on the base plate 54. Instead of the lens module 61, one or more lenses may be disposed between the lens 56 and the image pickup element 53.

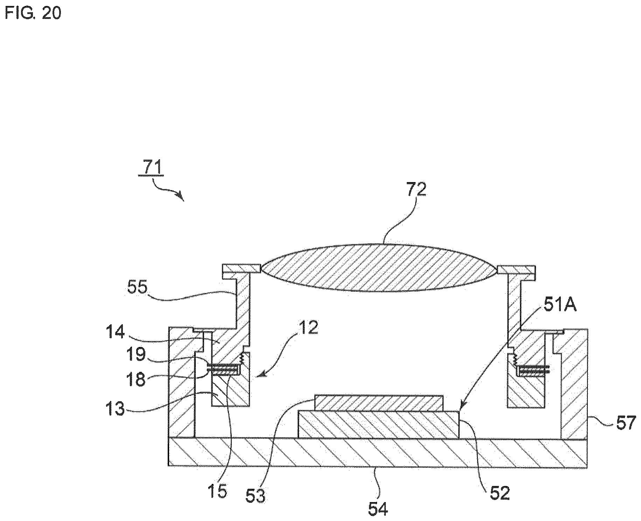

As in a camera 71 according to a fourth embodiment illustrated in Fig. 20, a convex lens 72 may be bonded to a mode converting connected part 55.

### Reference Signs List

- 1: camera
- 2: vibration device
- 3: camera body
- 4: body member
- 4a: base plate
- 5: imaging part
- 6: circuit
- 7: lens module
- 9: lens
- 11: case member
- 11a: projecting portion
- 11b: recess
- 12, 12A: cylindrical vibrating body part
- 13: first cylindrical member
- 13a: mount portion
- 13b: external thread portion
- 14: second cylindrical member
- 14a: lower end surface
- 14b: flange portion
- 15, 15A: piezoelectric vibrator
- 16, 17: piezoelectric plate
- 18, 19: terminal
- 21, 21A to 21H, 21B1: mode converting connected part
- 21a: flange portion
- 21b: thin portion
- 21c: cavity
- 21d: inward flange portion
- 21e: opening
- 22: light transmitting body part
- 22a: flange portion
- 41: cylindrical vibrating body part
- 42: piezoelectric body
- 43: cylindrical vibrating body part
- 44: piezoelectric vibrator
- 45: cylindrical member
- 51: camera
- 51A: body member
- 52: circuit board
- 53: image pickup element
- 54: base plate
- 54a,: 54b vibrator
- 55: mode converting connected part
- 56: lens
- 57: case member
- 58, 59: terminal
- 61: lens module
- 62a to 62c: lens
- 71: camera
- 72: convex lens

## Claims

1. A vibration device used in a camera body (3) having a lens (9), the vibration device (2) comprising:
a cylindrical vibrating body part (12, 12A, 41, 43) including a cylindrical member (13, 14) and a piezoelectric vibrator (15, 15A, 44) fixed to the cylindrical member (13, 14) ;
a cylindrical mode converting connected part (21, 21A - 21H, 21B1) connected to one end of the cylindrical vibrating body part (12, 12A, 41, 43); and
a light transmitting body part (22) bonded to a side of the mode converting connected part (21, 21A - 21H, 21B1) opposite from a side to which the cylindrical vibrating body part (12, 12A, 41, 43) is connected, and disposed on a front side of the lens (9),
wherein the mode converting connected part (21, 21A - 21H, 21B1) has a thin portion having a wall thickness smaller than a wall thickness of the cylindrical vibrating body part (12, 12A, 41, 43),
**characterized in that** a flange portion (14b) extending outward is provided in an end portion of the vibrating body part (12, 12A, 41, 43) on a side of the mode converting connected part (21, 21A - 21H, 21B1),
wherein a node of a vibration of the vibrating body part (12, 12A, 41, 43) exists in the flange portion (14b), and
wherein the flange portion (14b) is fixed to a case member (11, 57).

2. A vibration device used in a camera body having a lens (56, 72}, the vibration device comprising:
the lens (56; 72} of the camera;
a cylindrical vibrating body part (12) including a cylindrical member (13, 14) and a piezoelectric vibrator (15) fixed to the cylindrical member (13, 14); and
a cylindrical mode converting connected part (55) connected to one end of the cylindrical vibrating body part (12) and bonded to the lens (56, 72) of the camera on a side opposite from a side connected to the one end of the cylindrical vibrating body part (12),
wherein the mode converting connected part (15) has a thin portion having a wall thickness smaller than a wall thickness of the cylindrical vibrating body part (12),
**characterized in that** a flange portion (14b) extending outward is provided in an end portion of the vibrating body part (12) on a side of the mode converting connected part (55),
wherein a node of a vibration of the vibrating body part (12) exists in the flange portion (14b), and
wherein the flange portion (14b) is fixed to a case member (57).

3. The vibration device according to Claim 1 or 2, wherein the mode converting connected part (21, 21A - 21H, 21B1, 55) is configured to convert a vibration mode of the cylindrical vibrating body part (12, 12A, 41, 43) into a vibration mode of the light transmitting body part and to increase vibration.

4. The vibration device according to any one of Claims 1 to 3, wherein a volume of the mode converting connected part (21, 21A - 21H, 21B1, 55) is smaller than a volume of the cylindrical vibrating body part (12, 12A, 41, 43).

5. The vibration device according to any one of Claims 1 to 4, wherein the piezoelectric vibrator (15, 15A, 44) is cylindrical.

6. The vibration device (2) according to Claim 1, wherein a resonant frequency of the vibration mode in the light transmitting body part (22) is substantially equal to a resonant frequency of a vibration mode of a longitudinal effect or a transverse effect in the cylindrical vibrating body part (12, 12A, 41, 43).

7. The vibration device according to Claim 2, wherein a resonant frequency of the vibration mode in the lens (56, 72) is substantially equal to a resonant frequency of a vibration mode of a longitudinal effect or a transverse effect in the cylindrical vibrating body part (12).

8. The vibration device according to any one of Claims 1 to 7, wherein the cylindrical vibrating body part (12, 12A, 41, 43) is shaped like a circular cylinder.

9. The vibration device according to any one of Claims 1 to 8, wherein the cylindrical vibrating body part (12, 12A, 41, 43) is shaped like a rectangular cylinder.

10. The vibration device according to any one of Claims 1 to 7, wherein the mode converting connected part (21, 21A - 21H, 21B1, 55) is shaped like a circular cylinder.

11. The vibration device according to Claim 1, wherein the light transmitting body part (22) is shaped like a dome having a curved light transmitting portion disposed on a front side of the lens (9).

12. The vibration device according to Claim 11, wherein a vibration mode in the dome-shaped light transmitting body part (22) is a breathing vibration mode.

13. The vibration device according to Claim 11, wherein a vibration mode in the dome-shaped light transmitting body part (22) is a bending vibration mode.

14. The vibration device according to Claim 2, wherein a vibration mode of the lens (56, 72) is a breathing vibration mode.

15. The vibration device according to Claim 2, wherein a vibration mode of the lens (56, 72) is a bending vibration mode.

16. The vibration device according to any one of Claims 1 to 7, wherein the mode converting connected part (21, 21A - 21H, 21B1, 55) is constituted by a cylindrical body having the same outer diameter as an outer diameter of the cylindrical vibrating body part (12, 12A, 41, 43).

17. The vibration device according to any one of Claims 1 to 7, wherein the mode converting connected part (21, 21A - 21H, 21B1, 55) is constituted by a cylindrical body thinner than the cylindrical vibrating body part (12, 12A, 41, 43).

18. The vibration device according to any one of Claims 1 to 7, wherein at least one of an outer diameter and an inner diameter of the mode converting connected part (21, 21A - 21H, 21B1, 55) continuously changes from an end portion near the cylindrical vibrating body part (12, 12A, 41, 43) toward the light transmitting body part (22).

19. The vibration device according to any one of Claims 1 to 7, wherein a flange portion (21a, 21d) extending inward or outward is provided in an end portion of the mode converting connected part near the light transmitting body part (22).

20. A camera comprising: the vibration device according to any one of Claims 1 to 19; and a camera body with at least a part thereof being stored in the vibration device.

## Patentansprüche

1. Eine Schwingungsvorrichtung, die in einem Kamerakörper (3) mit einer Linse (9) verwendet wird, wobei die Schwingungsvorrichtung (2) folgende Merkmale aufweist:
ein zylindrisches schwingendes Körperteil (12, 12A, 41, 43), das ein zylindrisches Bauglied (13, 14) und einen piezoelektrischen Schwinger (15, 15A, 44) umfasst, der an dem zylindrischen Bauglied (13, 14) befestigt ist;
ein zylindrisches verbundenes Modenumwandlungsteil (21, 21A-21H, 21B1), das mit einem Ende des zylindrischen schwingenden Körperteils (12, 12A, 41, 43) verbunden ist; und
ein lichtübertragendes Körperteil (22), das an einer Seite des verbundenen Modenumwandlungsteils (21, 21A-21H, 21B1) gegenüber von einer Seite angebracht ist, mit der das zylindrische schwingende Körperteil (12, 12A, 41, 43) verbunden ist, und auf einer Vorderseite der Linse (9) angeordnet ist,
wobei das verbundene Modenumwandlungsteil (21, 21A-21H, 21B1) einem dünnen Abschnitt mit einer Wanddicke aufweist, die kleiner ist als eine Wanddicke des zylindrischen schwingenden Körperteils (12, 12A, 41, 43),
**dadurch gekennzeichnet, dass** ein Flanschabschnitt (14b), der sich nach außen erstreckt, in einem Endabschnitt des schwingenden Körperteils (12, 12A, 41, 43) auf einer Seite des verbundenen Modenumwandlungsteils (21, 21A-21H, 21B1) bereitgestellt ist,
wobei ein Knoten einer Schwingung des schwingenden Körperteils (12, 12A, 41, 43) in dem Flanschabschnitt (14b) vorhanden ist, und
wobei der Flanschabschnitt (14b) an einem Gehäusebauglied (11, 57) befestigt ist.

2. Eine Schwingungsvorrichtung, die in einem Kamerakörper mit einer Linse (56, 72) verwendet wird, wobei die Schwingungsvorrichtung folgende Merkmale aufweist:
die Linse (56, 72) der Kamera;
ein zylindrisches schwingendes Körperteil (12), das ein zylindrisches Bauglied (13, 14) und einen piezoelektrischen Schwinger (15) umfasst, der an dem zylindrischen Bauglied (13, 14) befestigt ist; und
ein zylindrisches verbundenes Modenumwandlungsteil (55), das mit einem Ende des zylindrischen schwingenden Körperteils (12) verbunden ist und an die Linse (56, 72) der Kamera auf einer Seite gegenüber von einer Seite angebracht ist, die mit dem einen Ende des zylindrischen schwingenden Körperteils (12) verbunden ist,
wobei das verbundene Modenumwandlungsteil (15) einen dünnen Abschnitt mit einer Wanddicke aufweist, die kleiner ist als eine Wanddicke des zylindrischen schwingenden Körperteils (12),
**dadurch gekennzeichnet, dass** ein Flanschabschnitt (14b), der sich nach außen erstreckt, in einem Endabschnitt des schwingenden Körperteils (12) auf einer Seite des verbundenen Modenumwandlungsteils (55) bereitgestellt ist,
wobei ein Knoten einer Schwingung des schwingenden Körperteils (12) in dem Flanschabschnitt (14b) vorhanden ist, und
wobei der Flanschabschnitt (14b) an einem Gehäusebauglied (57) befestigt ist.

3. Die Schwingungsvorrichtung gemäß Anspruch 1 oder 2, wobei das verbundene Modenumwandlungsteil (21, 21A-21H, 21B1, 55) dazu ausgebildet ist, eine Schwingungsmode des zylindrischen schwingenden Körperteils (12, 12A, 41, 43) in eine Schwingungsmode des lichtübertragenden Körperteils umzuwandeln und eine Schwingung zu erhöhen.

4. Die Schwingungsvorrichtung gemäß einem der Ansprüche 1 bis 3, wobei ein Volumen des verbundenen Modenumwandlungsteils (21, 21A-21H, 21B1, 55) kleiner ist als ein Volumen des zylindrischen schwingenden Körperteils (12, 12A, 41, 43).

5. Die Schwingungsvorrichtung gemäß einem der Ansprüche 1 bis 4, wobei der piezoelektrische Schwinger (15, 15A, 44) zylindrisch ist.

6. Die Schwingungsvorrichtung (2) gemäß Anspruch 1, wobei eine Resonanzfrequenz der Schwingungsmode in dem lichtübertragenden Körperteil (22) im Wesentlichen gleich groß ist wie eine Resonanzfrequenz einer Schwingungsmode eines Longitudinaleffektes oder Schrägeffektes in dem zylindrischen schwingenden Körperteil (12, 12A, 41, 43).

7. Die Schwingungsvorrichtung gemäß Anspruch 2, wobei eine Resonanzfrequenz der Schwingungsmode in der Linse (56, 72) im Wesentlichen gleich groß ist wie eine Resonanzfrequenz einer Schwingungsmode eines Longitudinaleffektes oder Schrägeffektes in dem zylindrischen schwingenden Körperteil (12).

8. Die Schwingungsvorrichtung gemäß einem der Ansprüche 1 bis 7, wobei das zylindrische schwingende Körperteil (12, 12A, 41, 43) wie ein kreisförmiger Zylinder geformt ist.

9. Die Schwingungsvorrichtung gemäß einem der Ansprüche 1 bis 8, wobei das zylindrische schwingende Körperteil (12, 12A, 41, 43) wie ein rechteckiger Zylinder geformt ist.

10. Die Schwingungsvorrichtung gemäß einem der Ansprüche 1 bis 7, wobei das verbundene Modenumwandlungsteil (21, 21A-21H, 21B1, 55) wie ein kreisförmiger Zylinder geformt ist.

11. Die Schwingungsvorrichtung gemäß Anspruch 1, wobei das lichtübertragende Körperteil (22) wie eine Kuppel mit einem gekrümmten lichtübertragenden Abschnitt geformt ist, der auf einer Vorderseite der Linse (9) angeordnet ist.

12. Die Schwingungsvorrichtung gemäß Anspruch 11, wobei eine Schwingungsmode in dem kuppelförmigen lichtübertragenden Körperteil (22) eine Atmungsschwingungsmode ist.

13. Die Schwingungsvorrichtung gemäß Anspruch 11, wobei eine Schwingungsmode in dem kuppelförmigen lichtübertragenden Körperteil (22) eine Biegungsschwingungsmode ist.

14. Die Schwingungsvorrichtung gemäß Anspruch 2, wobei eine Schwingungsmode der Linse (56, 72) eine Atmungsschwingungsmode ist.

15. Die Schwingungsvorrichtung gemäß Anspruch 2, wobei eine Schwingungsmode der Linse (56, 72) eine Biegungsschwingungsmode ist.

16. Die Schwingungsvorrichtung gemäß einem der Ansprüche 1 bis 7, wobei das verbundene Modenumwandlungsteil (21, 21A-21H, 21B1, 55) durch einen zylindrischen Körper ausgebildet ist, der denselben Außendurchmesser aufweist, wie ein Außendurchmesser des zylindrischen schwingenden Körperteils (12, 12A, 41, 43).

17. Die Schwingungsvorrichtung gemäß einem der Ansprüche 1 bis 7, wobei das verbundene Modenumwandlungsteil (21, 21A-21H, 21B1, 55) durch einen zylindrischen Körper ausgebildet ist, der dünner ist als das zylindrische schwingende Körperteil (12, 12A, 41, 43).

18. Die Schwingungsvorrichtung gemäß einem der Ansprüche 1 bis 7, wobei sich ein Außendurchmesser und/oder ein Innendurchmesser des verbundenen Modenumwandlungsteils (21, 21A-21H, 21B1, 55) fortlaufend von einem Endabschnitt in der Nähe des zylindrischen schwingenden Körperteils (12, 12A, 41, 43) zu dem lichtübertragenden Körperteil (22) hin ändert.

19. Die Schwingungsvorrichtung gemäß einem der Ansprüche 1 bis 7, wobei ein Flanschabschnitt (21a, 21d), der sich nach innen oder nach außen erstreckt, in einem Endabschnitt des verbundenen Modenumwandlungsteils in der Nähe des lichtübertragenden Körperteils (22) bereitgestellt ist.

20. Eine Kamera, die folgende Merkmale aufweist: die Schwingungsvorrichtung gemäß einem der Ansprüche 1 bis 19; und einen Kamerakörper, wobei zumindest ein Teil desselben in der Schwingungsvorrichtung untergebracht ist.

## Revendications

1. Dispositif de vibration utilisé dans un corps de caméra (3) ayant une lentille (9), le dispositif de vibration (2) comprenant :
une partie corps de vibration cylindrique (12, 12A, 41, 43) comprenant un élément cylindrique (13, 14) et un vibrateur piézoélectrique (15, 15A, 44) fixé sur l'élément cylindrique (13, 14) ;
une partie raccordée de conversion de mode cylindrique (21, 21A - 21H, 21B1) raccordée à une extrémité de la partie de corps de vibration cylindrique (12, 12A, 41, 43) ; et
une partie de corps de transmission de lumière (22) reliée à un côté de la partie raccordée de conversion de mode (21, 21A - 21H, 21B1) opposé à un côté auquel la partie de corps de vibration cylindrique (12, 12A, 41, 43) est raccordée, et disposée sur un côté avant de la lentille (9),
dans lequel la partie raccordée de conversion de mode (21, 21A - 21H, 21B1) a une partie fine ayant une épaisseur de paroi inférieure à une épaisseur de paroi de la partie de corps de vibration cylindrique (12, 12A, 41, 43),
**caractérisé en ce que** :
une partie de bride (14b) s'étendant vers l'extérieur est prévue dans une partie d'extrémité de la partie de corps de vibration (12, 12A, 41, 43) sur un côté de la partie raccordée de conversion de mode (21, 21A - 21H, 21B1),
dans lequel un nœud d'une vibration de la partie de corps de vibration (12, 12A, 41, 43) existe dans la partie de bride (14b), et
dans lequel la partie de bride (14b) est fixée à un élément de boîtier (11, 57).

2. Dispositif de vibration utilisé dans un corps de caméra ayant une lentille (56, 72), le dispositif de vibration comprenant :
la lentille (56 ; 72) de la caméra ;
une partie de corps de vibration cylindrique (12) comprenant un élément cylindrique (13, 14) et un vibrateur piézoélectrique (15) fixé sur l'élément cylindrique (13, 14) ; et
une partie raccordée de conversion de mode cylindrique (55) raccordée à une extrémité de la partie de corps de vibration cylindrique (12) et reliée à la lentille (56, 72) de la caméra d'un côté opposé à un côté raccordé à la une extrémité de la partie de corps de vibration cylindrique (12),
dans lequel la partie raccordée de conversion de mode (15) a une partie fine ayant une épaisseur de paroi inférieure à une épaisseur de paroi de la partie de corps de vibration cylindrique (12),
**caractérisé en ce que** :
une partie de bride (14b) s'étendant vers l'extérieur est prévue dans une partie d'extrémité de la partie de corps de vibration (12) d'un côté de la partie raccordée de conversion de mode (55),
dans lequel un nœud d'une vibration de la partie de corps de vibration (12) existe dans la partie de bride (14b), et
dans lequel la partie de bride (14b) est fixée sur un élément de boîtier (57).

3. Dispositif de vibration selon la revendication 1 ou 2, dans lequel la partie raccordée de conversion de mode (21, 21A - 21H, 21B1, 55) est configurée pour convertir un mode de vibration de la partie de corps de vibration cylindrique (12, 12A, 41, 43) en un mode de vibration de la partie de corps de transmission de lumière et pour augmenter la vibration.

4. Dispositif de vibration selon l'une quelconque des revendications 1 à 3, dans lequel un volume de la partie raccordée de conversion de mode (21, 21A - 21H, 21B1, 55) est inférieur à un volume de la partie de corps de vibration cylindrique (12, 12A, 41, 43).

5. Dispositif de vibration selon l'une quelconque des revendications 1 à 4, dans lequel le vibrateur piézoélectrique (15, 15A, 44) est cylindrique.

6. Dispositif de vibration (2) selon la revendication 1, dans lequel une fréquence de résonance du mode de vibration dans la partie de corps de transmission de lumière (22) est sensiblement égale à une fréquence de résonance d'un mode de vibration d'un effet longitudinal ou d'un effet transversal dans la partie de corps de vibration cylindrique (12, 12A, 41, 43).

7. Dispositif de vibration selon la revendication 2, dans lequel une fréquence de résonance du mode de vibration dans la lentille (56, 72) est sensiblement égale à une fréquence de résonance d'un mode de vibration d'un effet longitudinal ou d'un effet transversal dans la partie de corps de vibration cylindrique (12).

8. Dispositif de vibration selon l'une quelconque des revendications 1 à 7, dans lequel la partie de corps de vibration cylindrique (12, 12A, 41, 43) est formée comme un cylindre circulaire.

9. Dispositif de vibration selon l'une quelconque des revendications 1 à 8, dans lequel la partie de corps de vibration cylindrique (12, 12A, 41, 43) est formée comme un cylindre rectangulaire.

10. Dispositif de vibration selon l'une quelconque des revendications 1 à 7, dans lequel la partie raccordée de conversion de mode (21, 21A - 21H, 21B1, 55) est formée comme un cylindre circulaire.

11. Dispositif de vibration selon la revendication 1, dans lequel la partie de corps de transmission de lumière (22) est formée comme un dôme ayant une partie de transmission de lumière incurvée disposée sur un côté avant de la lentille (9).

12. Dispositif de vibration selon la revendication 11, dans lequel un mode de vibration dans la partie de corps de transmission de lumière (22) en forme de dôme est un mode de vibration respiratoire.

13. Dispositif de vibration selon la revendication 11, dans lequel un mode de vibration dans la partie de corps de transmission de lumière (22) en forme de dôme est un mode de vibration de courbure.

14. Dispositif de vibration selon la revendication 2, dans lequel un mode de vibration de la lentille (56, 72) est un mode de vibration respiratoire.

15. Dispositif de vibration selon la revendication 2, dans lequel un mode de vibration de la lentille (56, 72) est un mode de vibration de courbure.

16. Dispositif de vibration selon l'une quelconque des revendications 1 à 7, dans lequel la partie raccordée de conversion de mode (21, 21A - 21H, 21B1, 55) est constituée par un corps cylindrique ayant le même diamètre externe qu'un diamètre externe de la partie de corps de vibration cylindrique (12, 12A, 41, 43).

17. Dispositif de vibration selon l'une quelconque des revendications 1 à 7, dans lequel la partie raccordée de conversion de mode (21, 21A - 21H, 21B1, 55) est constituée par un corps cylindrique plus fin que la partie de corps de vibration cylindrique (12, 12A, 41, 43).

18. Dispositif de vibration selon l'une quelconque des revendications 1 à 7, dans lequel au moins l'un parmi un diamètre externe et un diamètre interne de la partie raccordée de conversion de mode (21, 21A - 21H, 21B1, 55) change de manière continue d'une partie d'extrémité à proximité de la partie de corps de vibration cylindrique (12, 12A, 41, 43) vers la partie de corps de transmission de lumière (22).

19. Dispositif de vibration selon l'une quelconque des revendications 1 à 7, dans lequel une partie de bride (21a, 21d) s'étendant vers l'intérieur ou vers l'extérieur est prévue dans une partie d'extrémité de la partie raccordée de conversion de mode à proximité de la partie de corps de transmission de lumière (22).

20. Caméra comprenant : le dispositif de vibration selon l'une quelconque des revendications 1 à 19 ; et un corps de caméra avec au moins l'une de ses parties qui est stockée dans le dispositif de vibration.
